# EUROPÄISCHE PATENTSCHRIFT

(11) **EP 1 843 915 B1**
(45) Veröffentlichungstag und Bekanntmachung des Hinweises auf die Patenterteilung: **26.11.2008**
(21) Anmeldenummer: 05819910.0
(22) Anmeldetag: 09.12.2005
(51) Int. Cl.: B60N 3/14

(54) **BEFESTIGUNGSEINHEIT UND KNOPF F]R EINEN HEIZEINSATZ EINES ZIGARETTENANZ]NDERS**
FIXING UNIT AND BUTTON FOR A CIGAR LIGHTER HEATING ELEMENT
UNITE DE FIXATION ET BOUTON POUR UN ELEMENT CHAUFFANT D'UN ALLUME-CIGARE

(30) Priorität: 02.02.2005 DE 102005004724
(43) Veröffentlichungstag der Anmeldung: 17.10.2007
(73) Patentinhaber: Casco Schoeller GmbH, 60437 Frankfurt am Main (DE)
(72) Erfinder: BALDAUF, Albert, 63456 Hanau (DE); SCHWARZBACH, Ronald, 60439 Frankfurt (DE); GRAESER, Norbert, 60529 Frankfurt (DE)
(74) Vertreter: Luderschmidt, Wolfgang
(86) Internationale Anmeldenummer: PCT/EP2005/013190
(87) Internationale Veröffentlichungsnummer: WO 2006/081859

(56) Entgegenhaltungen:
- EP-A- 0 776 785
- DE-A1- 4 403 680
- GB-A- 2 038 466

## Beschreibung

Die vorliegende Erfindung betrifft eine Befestigungseinheit für einen Grundkörper eines Heizeinsatzes, der Teil eines elektrischen Zigarettenanzünders, insbesondere für Kraftfahrzeuge, ist. Die erfindungsgemäße Befestigungseinheit dient zum Befestigen eines Knopfes zum Betätigen des Heizeinsatzes des Zigarettenanzünders. Die vorliegende Erfindung betrifft außerdem einen derartigen Knopf zum Befestigen an der Befestigungseinheit.

Herkömmliche elektrische Zigarettenanzünder, die in Kraftfahrzeugen verwendet werden, weisen grundsätzlich einen Zündkörper in Form einer elektrisch leitenden Hülse und einen Heizeinsatz auf, der in dem Zündkörper herausziehbar angeordnet ist. Eingebaut wird ein derartiger Zigarettenanzünder in eine ortsfeste Wand, beispielsweise in das Armaturenbrett oder in die Mittelkonsole eines Kraftfahrzeugs, und mittels Anschlusselementen mit dem Bordnetz des Kraftfahrzeugs verbunden.

Zum Betätigen des Heizeinsatzes dient ein Knopf, der in einer herstellerspezifischen Ausbildung mit einer bestimmten Knopfform in Verbindung mit einem bestimmten Logo, zur Verzierung im Interieur eines Pkws beitragen kann. Herkömmliche Heizeinsätze sind derart aufgebaut, dass der Knopf nach dem Zusammenbau des Heizeinsatzes nicht mehr ausgetaucht werden kann. Insofern ist es von Bedeutung, dass der Knopf beim Zusammenbau des Heizeinsatzes nicht beschädigt wird. Im Falle einer Beschädigung des Knopfes muss ein derartiger Heizeinsatz, der im übrigen ein in der Herstellung relativ teueres Produkt darstellt, als Ausschussware verworfen werden.

Der Zusammenbau eines derartigen Heizeinsatzes erfolgt in mehreren Arbeitgängen, wobei bekanntlich vom Knopf ausgehend alle Teile des Heizeinsatzes der Reihe nach montiert werden.

Da der Knopf den beim Zusammenbau des Heizeinsatzes auftretenden mechanischen Beanspruchungen von Anfang an ausgesetzt ist, kann die Beschädigung des Knopfes bei der Montage nicht ausgeschlossen werden. Daher ist es schwierig, einen hohen Qualitätsstandard zu erreichen.

Die DE 44 03 680 A1 beschreibt eine Befestigungseinheit für den Grundkörper eines Heizeinsatzes eines Zigarettenanzünders. Der Grundkörper des Heizeinsatzes weist ein Gehäuse auf, in das ein Befestigungsstück für den Knopf zum Betätigen des Heizeinsatzes eingesetzt ist. Das Befestigungsstück, das in dem Grundkörper des Heizeinsatzes axial verschiebbar geführt ist, verfügt über einen Adapter zum Befestigen des Knopfes. Der Adapter weist einen Zapfen auf, der in ein Blindloch des Knopfs eingreift, wobei der Knopf mit dem Zapfen verklebt oder verschweißt ist.

Der Erfindung liegt deshalb die Aufgabe zugrunde, den Qualitätsstandard beim Zusammenbau derartiger Heizeinsätze zu verbessern, um somit Ausschussware zu vermeiden.

Die Lösung dieser Aufgabe erfolgt erfindungsgemäß mit den im Patentanspruch 1 angegebenen Merkmalen.

Die erfindungsgemäße Befestigungseinheit für einen Grundkörper eines Heizeinsatzes, der Teil eines elektrischen Zigarettenanzünders ist, dient zum Befestigen eines erfindungsgemäßen Knopfes, mit dem der Heizeinsatz betätigt wird. Erfindungsgemäß umfasst die Befestigungseinheit ein Befestigungsstück, das an dem Gehäuse des Grundkörpers des Heizeinsatzes befestigbar ist, und einen Adapter zum Befestigen des erfindungsgemäßen Knopfes, wobei der Adapter in das Befestigungsstück passgenau eingesetzt und axial zu diesem verschiebbar geführt ist. Der erfindungsgemäße Knopf zum Befestigen an der Befestigungseinheit ist derart ausgebildet, dass er auf die Befestigungseinheit aufsetzbar und an dieser befestigbar ist.

Zum Befestigen am Grundkörper des Heizeinsatzes ist der Adapter auf der dem Zapfen gegenüberliegende Seite als Ring ausgebildet, wobei zwischen dem Zapfen und dem Ring eine Trennwand liegt, die mit mindestens einer Aussparung in radialer Richtung zum Befestigen des Knopfes versehen sein kann. Vorzugsweise ist die Trennwand mit drei Aussparungen versehen, die um 120° zueinander angeordnet sind. Der ringförmig ausgebildete Teil des Adapters ermöglicht die Aufnahme einer Rückstellfeder in Form einer Schraubenfeder, die Teil des Grundkörpers des Heizeinsatzes ist.

Der Adapter weist ringseitig eine zentrische Ausnehmung zur Aufnahme eines Verbindungsstifts auf, der ebenfalls Teil des Grundkörpers des Heizeinsatzes ist.

Bei einer bevorzugten Ausführungsform der Erfindung ist das Befestigungsstück einteilig und im Wesentlichen rotationssymmetrisch ausgebildet und umfasst zum Befestigen an dem Gehäuse des Grundkörpers Aussparungen zum Einrasten von Rastmitteln. Vorzugsweise ist das Befestigungsstück mit zwei diametral gegenüberliegenden Aussparungen versehen. Alternativ kann das Befestigungsstück auch kastenförmig ausgebildet sein.

Zur Ausbildung eines Bundes ist das Befestigungsstück am knopfseitigen Ende entlang des ganzen Umfangs vorzugsweise lippenförmig gewölbt. Im eingesetzten Zustand des Heizeinsatzes in einem in einer ortsfesten Wand eingebauten Zündkörper liegt dieser Bund an der ortsfesten Wand an. Alternativ kann der Bund auch ringscheibenförmig ausgebildet sein.

Zweckmäßigerweise ist der in das Befestigungsstück passgenau eingesetzte Adapter einteilig und rotationssymmetrisch ausgebildet, wobei der Adapter unterschiedliche Durchmesser aufweisen kann.

In einer weiteren bevorzugten Ausführungsform der Erfindung ist der Adapter knopfseitig vorzugsweise als ein im Wesentlichen zylindrischer Zapfen zur Aufnahme des Knopfes ausgebildet.

Der Knopf zum Aufsetzen auf den Zapfen ist zweckmäßigerweise einteilig und im Wesentlichen rotationsförmig ausgebildet. Zudem ist der Knopf zweckmäßigerweise als hohlförmiger Körper mit einer im wesentlichen zylindrisch Ausnehmung ausgebildet.

Bei einer weiteren bevorzugten Ausführungsform der Erfindung ist der Zapfen des Adapters zur Aufnahme des Knopfes vorteilhafterweise mit mindestens einer Nut in axialer Richtung versehen. Vorzugsweise weist der Zapfen drei Nuten in axialer Richtung auf, die um 120° zueinander angeordnet sind.

Zweckmäßigerweise weist die Ausnehmung des Knopfes mindestens eine Feder in axialer Richtung zum Einführen in die mindestens eine Nut des Adapter auf. Vorzugsweise ist die Ausnehmung mit drei Federn versehen, die um 120° zueinander angeordnet sind.

Der Knopf ist vorzugsweise einrastend bzw. einschnappend an der Befestigungseinheit befestigbar. Dabei kann der Knopf adapterseitig eine plane Auflagefläche aufweisen, von der aus Mittel zum Befestigen an der Befestigungseinheit, beispielsweise mindestens eine Rastnase, ausgehen können. Vorzugsweise ist der Knopf mit drei Rastnasen versehen, die um 120° zueinander angeordnet sind.

Sowohl das Befestigungsstück als auch der Adapter sind vorzugsweise als Kunststoffspritzgussteile ausgebildet, wobei als Kunststoff vorteilhafterweise ein hitzebeständiger Thermoplast in Frage kommt.

Der Knopf ist ebenfalls vorzugsweise als Kunststoffspritzgussteil ausgebildet, wobei analog zum Befestigungsstück als Kunststoff vorteilhafterweise ein hitzebeständiger Thermoplast in Frage kommt.

Mit der erfindungsgemäßen Befestigungseinheit wird der Qualitätsstandard beim Zusammenbau des Heizeinsatzes verbessert, da der erfindungsgemäße Knopf entgegen herkömmlicher Knöpfe erst im letzten Arbeitsgang des Zusammenbaus verbaut werden kann. Dadurch wird vermieden, dass der Knopf als ein Verzierungselement den bei dem Zusammenbau auftretenden mechanischen Beanspruchungen ausgesetzt wird. Insofern ist die Beschädigung des Knopfes während der einzelnen Arbeitsgänge bei der Montage ausgeschlossen.

Im folgenden wird ein Ausführungsbeispiel der Erfindung unter Bezugnahme auf Zeichnungen näher erläutert. Es zeigen:
- Figur 1: zwei Explosionsdarstellungen eines Heizeinsatzes, der Teil eines elektrischen Zigarettenanzünders ist, mit einer erfindungsgemäßen Befestigungseinheit und einem erfindungsgemäßen Knopf,
- Figur 2: eine Schnittansicht des Heizeinsatzes zur Darstellung eines Befestigungsstücks und eines Adapters der erfindungsgemäßen Befestigungseinheit, wobei der erfindungsgemäße Knopf an dem Adapter befestigt ist, und
- Figur 3: eine Ansicht des Adapters, des Knopfes und des Adapters mit dem befestigten Knopf.

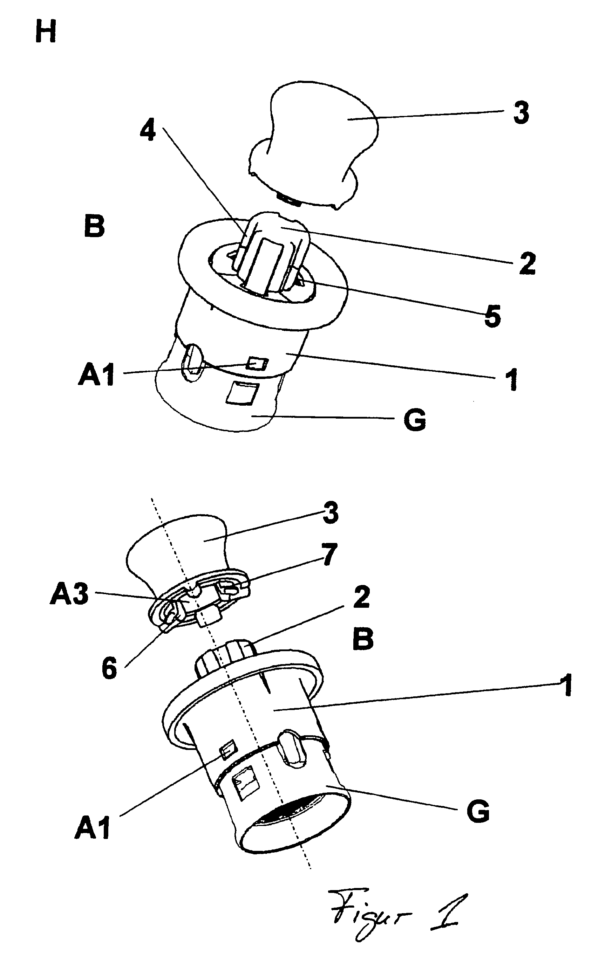

Figur 1 zeigt zwei Explosionsdarstellungen eines Heizeinsatzes H, der Teil eines elektrischen Zigarettenanzünders für Kraftfahrzeuge ist. Bei dem Zigarettenanzünder handelt es sich um ein Bauteil, das grundsätzlich aus einem hier nicht dargestellten Zündkörper in Form einer elektrisch leitenden Hülse und dem Heizeinsatz H besteht, der in dem Zündkörper herausziehbar angeordnet ist. Eingebaut wird der Zigarettenanzünder in eine ortsfeste Wand, beispielsweise in das Armaturenbrett oder in die Mittelkonsole eines Kraftfahrzeugs. Mittels Anschlusselementen wird der Zigarettenanzünder mit dem Bordnetz des Kraftfahrzeugs verbunden.

Der hülsenförmige Zündkörper verfügt zur Aufnahme des Heizeinsatzes H über ein offenes Ende, das mit einem Bund versehen ist, der an der Vorderseite der ortsfesten Wand zur Anlage kommt. Dem offenen Ende gegenüberliegend weist der hülsenförmige Zündkörper einen Boden auf, der einen U-förmigem Bimetallstreifen mit zwei axial ausgerichteten Lamellen trägt, die jeweils mit einer Haltenase versehen sind, wobei die Haltenasen zueinander gerichtet sind.

Der Bimetallstreifen ist dazu bestimmt mittels eines Anschlusselements elektrisch mit einem Pluspol verbunden zu werden, während die Hülse mit einem Minuspol (Masse) verbunden wird. Zwei Haltezungen, die im hülsenförmigen Zündkörper in Form von U-förmigen Schlitzen ausgeführt und diametral gegenüberliegend angeordnet sind, halten den im Inneren angeordneten Heizeinsatz H in Position und bringen diesen zugleich mit der elektrisch leitenden Hülse in Kontakt.

Der in Figur 1 abgebildete Heizeinsatz H umfasst einen im Wesentlichen zylindrischen Grundkörper, der ein Gehäuse G aufweist. Dieser Grundkörper ist mit einer erfindungsgemäßen Befestigungseinheit B zur Befestigung eines erfindungsgemäßen Knopfes 3 verbunden, der zum Betätigen des besagten Heizeinsatzes H dient.

Die erfindungsgemäße Befestigungseinheit B umfasst ein einteiliges und im Wesentlichen rotationssymmetrisches Befestigungsstück 1, das an dem Gehäuse G des Grundkörpers einrastend befestigt ist, und einen einteiligen und im Wesentlichen rotationssymmetrischen Adapter 2, der in das Befestigungsstück 1 passgenau eingesetzt und zu diesem axial verschiebbar geführt ist. Der erfindungsgemäße Knopf 3 ist einteilig und im Wesentlichen rotationssymmetrisch ausgebildet und an dem Adapter 2 einrastend befestigt.

Mittels dreier recheckiger Aussparungen A1, die in einem Winkel von 120° am Befestigungsstück 1 angebracht sind, kommt die einrastende Verbindung zwischen dem Gehäuse G des Grundkörpers und des Befestigungsstücks 1 zustande, wobei Rastzungen, sogenannte "Snap-Ins", in die Aussparungen A1 eingreifen. Zur Ausbildung eines Bundes, der im eingesetzten Zustand des Heizeinsatzes H an der ortsfesten Wand anliegt, ist das Befestigungsstück 1 am knopfseitigen Ende entlang des ganzen Umfangs lippenförmig gewölbt.

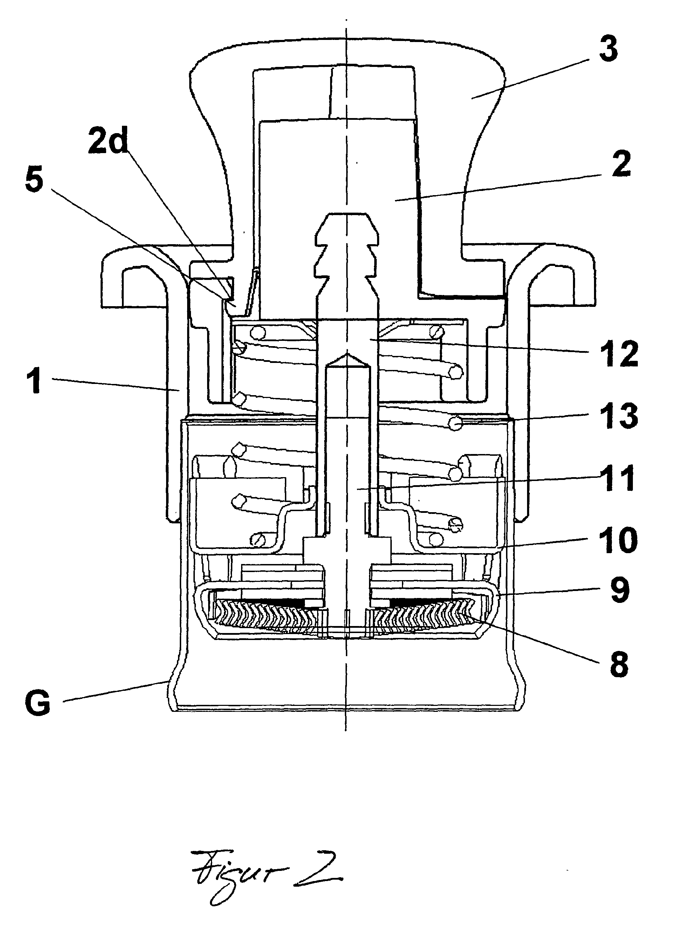

In Figur 2 ist der Heizeinsatz H in einer Schnittansicht zur Darstellung des Befestigungsstücks 1 und des Adapters 2 der erfindungsgemäßen Befestigungseinheit B und des erfindungsgemäßen Knopfes 3 abgebildet.

Grundsätzlich weist der Heizeinsatz H zwei Teile auf, einen im hülsenförmigen Zündkörper ortsfest angeordneten Teil und einen axial zu diesem beweglichen Teil. Ersterer setzt sich aus dem Befestigungsstück 1 und dem Gehäuse G des Grundkörpers zusammen, während letzterer alle übrigen Teile des Heizeinsatzes H umfasst.

Der Grundkörper des Heizeinsatzes H repräsentiert einen standardmäßigen Aufbau und umfasst ein Heizelement 8, das im Inneren eines Napfs 9 angeordnet ist, eine Führung 10, eine Achse 11, einen Verbindungsachse 12 zur Befestigung des Grundkörpers mit dem Adapter 2, wobei die Achse 11 mit der Verbindungsachse 12 verstemmt ist, und eine als Schraubenfeder 13 ausgebildete Rückstellfeder, die zwischen dem Adapter 2 und der Führung 10 angeordnet ist.

Ein derartiger Aufbau des Grundkörpers ist dem Fachmann im allgemeinen aus dem Stand der Technik bekannt.

In der Normalposition ist der bewegliche Teil des Heizeinsatzes H bzw. der Napf 9, in dem das Heizelement 8 liegt, zu den Lamellen des Bimetallstreifens beabstandet angeordnet, so dass kein Stromfluss zwischen dem Bimetallstreifen und dem elektrisch leitenden und hülsenförmigen Zündkörper zustande kommt. Zur Erhitzung des Heizelements 8 wird der bewegliche Teil des Heizeinsatzes H bzw. der Napf 9 des Heizelements 8 mittels des Knopfes 3 von der Normalposition in eine Heizposition eingedrückt, wobei die Rückstellfeder 13 zusammengedrückt wird. Bei der Vorwärtsbewegung des beweglichen Teils in axialer Richtung spreizt der Napf 9 in bekannter Weise die Lamellen des U-förmig ausgebildeten Bimetallstreifens, woraufhin der Napf 9 unter die Haltenasen der besagten Lamellen gelangt, die den Napf 9 entgegen der Wirkung der Rückstellfeder 13 in der eingedrückten Heizposition halten. Durch das Einrasten des Napfs 9, der die Funktion eines elektrischen Schalters hat, kommt ein Stromfluss zwischen dem Bimetallstreifen und dem elektrisch leitenden und hülsenartigen Zündkörpers zustande. Dabei erhitzt sich das Heizelement 8 aufgrund seines Widerstandes auf. Durch die Erhitzung des Heizelements 8 dehnen sich die am Napf 9 des Heizelements 8 anliegenden Lamellen des Bimetallstreifens nach außen. Damit sich die Lamellen unter dem Einfluss der Hitzeentwicklung ausdehnen können, weist die Hülse des Zündkörpers seitliche Öffnungen auf, durch die sich die Lamellen nach außen aufspreizen können. Bei einer bestimmten Temperatur übt die Rückstellfeder 13 ihre Wirkung aus, so dass sich der Teller 9 des Heizelements 8 vom Bimetallstreifen lösen kann, um eine Austrittsposition einzunehmen und den Stromfluss zu unterbrechen. Ein Fahrer bzw. Beifahrer braucht dann nur noch den Heizeinsatzes H herauszuziehen, um seine Zigarette oder Zigarre anzuzünden.

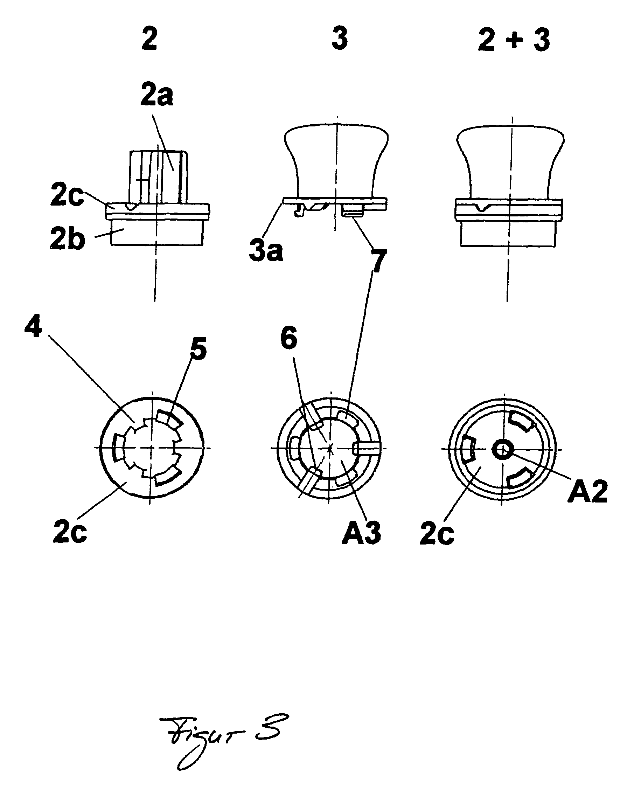

In der oberen Reihe von Figur 3 sind, beginnend von links nach rechts, eine Ansicht des Adapters 2, des Knopfes 3 und des Adapters 2 mit befestigtem Knopf 3 abgebildet, wohingegen in der unteren Reihe, beginnend von links nach rechts, der Adapter 2 in der Draufsicht, der Knopf 3 und der Adapter 2 mit befestigtem Knopf 3 in der Unteransicht abgebildet sind.

Bezugnehmend auf den Adapter 2 ist zu erkennen, dass dieser abschnittsweise unterschiedliche Durchmesser aufweist. Knopfseitig weist der Adapter 2 einen im Wesentlichen zylindrischen Zapfen 2a auf, während er auf der dem Zapfen 2a gegenüberliegenden Seite als Ring 2b ausgebildet ist, wobei zwischen dem Zapfen 2a und dem Ring 2b eine Trennwand 2c liegt. Zur Aufnahme des Knopfes 3 ist der Zapfen 2a mit drei Nuten 4 in axialer Richtung versehen, die um 120° zueinander angeordnet sind. Die Trennwand 2c des Adapters 2 weist drei viereckige Aussparungen 5 in radialer Richtung zur Befestigung des Knopfes 3 auf, die um 120° zueinander angeordnet sind. Ringseitig weist der Adapter 2 zur Aufnahme der Verbindungsachse 12 des Grundkörpers eine zentrische Ausnehmung A2 auf, die in der unteren Explosionsdarstellung der Figur 1 zu erkennen ist.

Der Knopf 3 weist adapterseitig eine plane Auflagefläche 3a auf, von der aus drei Rastnasen 7 ausgehen, die als Mittel zur Befestigung in die Aussparungen 5 des Adapters 2 eingreifen, wobei diese drei Rastnasen 7 um 120° zueinander angeordnet sind. Bezugnehmend auf die Unteransicht des Knopfes 3 ist zu erkennen, dass dieser als hohlförmiger Körper mit einer Ausnehmung A3 zum Aufsetzen auf den Zapfen 2a ausgebildet ist. Im Inneren dieser im Wesentlichen zylindrischen Ausnehmung A3 weist der Knopf 3 drei Federn 6 zum Einführen in die drei Nuten 4 des Adapters 2 auf, wobei die Federn 6 entsprechend der Nuten 4 um 120° zueinander angeordnet sind.

In der Schnittansicht der Figur 2 ist zu erkennen, dass der Knopf 3 einrastend mit dem Adapter 2 der Befestigungseinheit B verbunden ist. Im eingerasteten Zustand des Knopfes 3 erstrecken sich die Rastnasen 7 durch die Aussparungen 5 der Trennwand 2c und greifen hinter einen umlaufend nach innen vorspringenden Ansatz 2d des Adapters 2. In der Unteransicht des Adapters 2 mit befestigtem Knopf 3 sind die Rastnasen 7 im eingerasteten Zustand zu erkennen.

Sowohl das Befestigungsstück 1 und der Adapter 2 der erfindungsgemäßen Befestigungseinheit B als auch der erfindungsgemäße Knopf 3 sind als Kunststoffspritzgussteile ausgebildet, wobei der Kunststoff ein hitzebeständiger Thermoplast ist.

## Patentansprüche

1. Befestigungseinheit für einen ein Gehäuse (G) aufweisenden Grundkörper eines Heizeinsatzes (H), der Teil eines Zigarettenanzünders ist, zum Befestigen eines Knopfes (3), der zum Betätigen des Heizeinsatzes (H) dient, mit einem Befestigungsstück (1), das am Gehäuse (G) des Grundkörpers des Heizeinsatzes (H) befestigbar ist, und einem Adapter (2), der knopfseitig einen Zapfen (2a) zum Befestigen des Knopfes (3) aufweist, wobei der Adapter (2) in das Befestigungsstück (1) passgenau eingesetzt und axial zu diesem verschiebbar geführt ist, **dadurch gekennzeichnet,**
**dass** der Adapter (2) zum Befestigen am Grundkörper des Heizeinsatzes (H) auf der dem Zapfen (2a) gegenüberliegenden Seite als Ring (2b) ausgebildet ist, wobei zwischen dem Zapfen (2a) und dem Ring (2b) eine Trennwand (2c) liegt, und dass der Adapter (2) ringseitig eine zentrische Ausnehmung (A2) zur Aufnahme des Grundkörpers des Heizeinsatzes (H) aufweist.

2. Befestigungseinheit nach Anspruch 1, **dadurch gekennzeichnet, dass** das Befestigungsstück (1) zum Befestigen am Gehäuse (G) des Grundkörpers des Heizeinsatzes (H) mindestens eine Aussparung (A1) zum Einrasten von Rastmitteln aufweist.

3. Befestigungseinheit nach Anspruch 1 oder 2, **dadurch gekennzeichnet, dass** das Befestigungsstück (1) am knopfseitigen Ende entlang des ganzen Umfangs lippenförmig gewölbt ist.

4. Befestigungseinheit nach Anspruch 1 oder 2, **dadurch gekennzeichnet, dass** das Befestigungsstück (1) einteilig und im Wesentlichen rotationssymmetrisch ausgebildet ist.

5. Befestigungseinheit nach Anspruch 1, **dadurch gekennzeichnet, dass** der Adapter (2) einteilig und im Wesentlichen rotationssymmetrisch ausgebildet ist.

6. Befestigungseinheit nach Anspruch 5, **dadurch gekennzeichnet, dass** der Adapter (2) abschnittsweise unterschiedliche Durchmesser aufweist.

7. Befestigungseinheit nach Anspruch 6, **dadurch gekennzeichnet, dass** der Zapfen (2a) des Adapter (2) ein im Wesentlichen zylindrischer Zapfen ist.

8. Befestigungseinheit nach Anspruch 7, **dadurch gekennzeichnet, dass** der Zapfen (2a) des Adapters (2) mit mindestens einer Nut (4) in axialer Richtung zur Aufnahme des Knopfes (3) versehen ist.

9. Befestigungseinheit nach einem der Ansprüche 1 bis 8, **dadurch gekennzeichnet, dass** die Trennwand (2c) des Adapters (2) mit mindestens einer Aussparung (5) in radialer Richtung zum Befestigen des Knopfes (3) versehen ist.

10. Befestigungseinheit nach einem der Ansprüche 1 bis 9, **dadurch gekennzeichnet, dass** sowohl das Befestigungsstück (1) als auch der Adapter (2) als Kunststoffspritzgussteile ausgebildet sind.

11. Befestigungseinheit nach Anspruch 10, **dadurch gekennzeichnet, dass** der Kunststoff der Spritzgussteile ein Thermoplast ist.

12. Befestigungseinheit nach einem der Ansprüche 1 bis 11, **dadurch gekennzeichnet, dass** der Knopf (3) auf die Befestigungseinheit (B) aufgesetzt und an der Befestigungseinheit (B) befestigt ist.

13. Befestigungseinheit nach Anspruch 12, **dadurch gekennzeichnet, dass** der Knopf (3) einrastend an der Befestigungseinheit (B) befestigt ist.

14. Befestigungseinheit nach Anspruch 12 oder 13, **dadurch gekennzeichnet, dass** der Knopf (3) einteilig und im Wesentlichen rotationssymmetrisch ausgebildet ist.

15. Befestigungseinheit nach einem der Ansprüche 12 bis 14, **dadurch gekennzeichnet, dass** der Knopf (3) adapterseitig eine plane Auflagefläche (3a) mit Mitteln zum Befestigen an der Befestigungseinheit (B) aufweist.

16. Befestigungseinheit nach Anspruch 15, **dadurch gekennzeichnet, dass** die Mittel zum Befestigen des Knopfes (3) an der Befestigungseinheit (B) mindestens eine Rastnase (7) aufweisen.

17. Befestigungseinheit nach Anspruch 16, **dadurch gekennzeichnet, dass** der Knopf (3) als hohlförmiger Körper mit einer Ausnehmung (A3) zum Aufsetzen auf den Zapfen (2a) des Adapters (2) ausgebildet ist.

18. Befestigungseinheit nach Anspruch 17, **dadurch gekennzeichnet, dass** die Ausnehmung (A3) im Wesentlichen zylindrisch ist.

19. Befestigungseinheit nach Anspruch 18, **dadurch gekennzeichnet, dass** die Ausnehmung (A3) mindestens eine Feder (6) in axialer Richtung zum Einführen in die mindestens eine Nute (4) aufweist.

20. Befestigungseinheit nach einem der Ansprüche 12 bis 19, **dadurch gekennzeichnet, dass** der Knopf (3) als Kunststoffspritzteil ausgebildet ist.

21. Befestigungseinheit nach Anspruch 20, **dadurch gekennzeichnet, dass** der Kunststoff des Knopfes (3) ein Thermoplast ist.

## Claims

1. Attaching unit for a main body, having a housing (G), of a heating unit (H), which heating unit (H) is part of a cigar lighter, for attaching a knob (3) which is used to actuate the heating unit (H), having an attaching piece (1) which can be attached to the housing (G) of the main body of the heating unit (H), and having an adapter (2) which has, at the knob end, a spigot (2a) for attaching the knob (3), the adapter (2) being inserted in the attaching piece (1) as an exact fit and being guided to be displaceable axially relative thereto, **characterised in that**, for attachment to the main body of the heating unit (H), the adapter (2) is in the form of a ring (2b) at the opposite end from the spigot (2a), a partition (2c) being situated between the spigot (2a) and the ring (2b), and **in that** the adapter (2) has, at the ring end, a central recess (A2) to receive the main body of the heating unit (H).

2. Attaching unit according to claim 1, **characterised in that**, for attachment to the housing (G) of the main body of the heating unit (H), the attaching piece (1) has at least one cut-out (A1) for latching means to latch into.

3. Attaching unit according to claim 1 or 2, **characterised in that**, the attaching piece (1) is curved over around its entire circumference at the knob end in a lip-like form.

4. Attaching unit according to claim 1 or 2, **characterised in that** the attaching piece (1) is in one piece and is formed to be substantially symmetrical in rotation.

5. Attaching unit according to claim 1, **characterised in that** the adapter (2) is in one piece and is formed to be substantially symmetrical in rotation.

6. Attaching unit according to claim 5, **characterised in that** sections of the adapter (2) are of different diameters.

7. Attaching unit according to claim 6, **characterised in that** the spigot (2a) of the adapter (2) is a substantially cylindrical spigot.

8. Attaching unit according to claim 7, **characterised in that** the spigot (2a) of the adapter (2) is provided with at least one groove (4) in the axial direction to receive the knob (3).

9. Attaching unit according to one of claims 1 to 8, **characterised in that** the partition (2c) of the adapter (2) is provided with at least one cut-out (5) in the radial direction for attaching the knob.

10. Attaching unit according to one of claims 1 to 9, **characterised in that** both the attaching piece (1) and the adapter (2) are in the form of injection mouldings of plastics material.

11. Attaching unit according to claim 10, **characterised in that** the plastics material of the injection mouldings is a thermoplastic material.

12. Attaching unit according to one of claims 1 to 11, **characterised in that** the knob (3) is fitted onto the attaching unit (B) and is attached to the attaching unit (B).

13. Attaching unit according to claim 12, **characterised in that** the knob (3) is attached to the attaching unit (B) by latching into it.

14. Attaching unit according to claim 12 or 13, **characterised in that** the knob (3) is in one piece and is formed to be substantially symmetrical in rotation.

15. Attaching unit according to one of claims 12 to 14, **characterised in that** the knob (3) has, at the adapter end, a plane contacting face (3a) having means for attaching to the attaching unit (B).

16. Attaching unit according to claim 15, **characterised in that** the means for attaching the knob (3) to the attaching unit (B) have at least one latching nose.

17. Attaching unit according to claim 16, **characterised in that** the knob (3) is in the form of a hollow body having a recess (A3) for fitting onto the spigot (2a) of the adapter (2).

18. Attaching unit according to claim 17, **characterised in that** the recess (A3) is substantially cylindrical.

19. Attaching unit according to claim 18, **characterised in that** the recess (A3) has at least one spline (6) in the axial direction for insertion in the at least one groove (4).

20. Attaching unit according to one of claims 12 to 19, **characterised in that** the knob (3) is in the form of an injection moulding of plastics material.

21. Attaching unit according to claim 20, **characterised in that** the plastics material of the knob (3) is a thermoplastic material.

## Revendications

1. Unité de fixation pour un corps de base d'un élément chauffant (H), présentant un boîtier (G), qui fait partie d'un allume-cigares, pour la fixation d'un bouton (3) qui sert à actionner l'élément chauffant (H), avec une pièce de fixation (1) qui peut être fixée sur le boîtier (G) du corps de base de l'élément chauffant (H), et un adaptateur (2) qui présente côté bouton un tenon (2a) pour la fixation du bouton (3), l'adaptateur (2) étant inséré en ajustement serré dans la pièce de fixation (1) et étant guidé en déplacement axialement par rapport à celle-ci, **caractérisée en ce que** l'adaptateur (2) pour la fixation sur le corps de base de l'élément chauffant (H) est réalisé sur le côté opposé au tenon (2a) comme un anneau (2b), entre le tenon (2a) et l'anneau (2b) se trouvant une paroi de séparation (2c), et **en ce que** l'adaptateur (2) présente côté anneau un évidement (A2) central pour la réception du corps de base de l'élément chauffant (H).

2. Unité de fixation selon la revendication 1, **caractérisée en ce que** la pièce de fixation (1) pour la fixation sur le boîtier (G) du corps de base de l'élément chauffant (H) présente au moins un évidement (A1) pour l'encliquetage de moyens d'encliquetage.

3. Unité de fixation selon la revendication 1 ou 2, **caractérisée en ce que** la pièce de fixation (1) est cintrée en forme de lèvre sur l'extrémité côté bouton le long de sa périphérie entière.

4. Unité de fixation selon la revendication 1 ou 2, **caractérisée en ce que** la pièce de fixation (1) est réalisée en une seule partie et essentiellement à symétrie de révolution.

5. Unité de fixation selon la revendication 1, **caractérisée en ce que** l'adaptateur (2) est réalisé en une seule partie et essentiellement à symétrie de révolution.

6. Unité de fixation selon la revendication 5, **caractérisée en ce que** l'adaptateur (2) présente par endroits des diamètres différents.

7. Unité de fixation selon la revendication 6, **caractérisée en ce que** le tenon (2a) de l'adaptateur (2) est un tenon essentiellement cylindrique.

8. Unité de fixation selon la revendication 7, **caractérisée en ce que** le tenon (2a) de l'adaptateur (2) est pourvu d'au moins une rainure (4) dans le sens axial pour la réception du bouton (3).

9. Unité de fixation selon l'une quelconque des revendications 1 à 8, **caractérisée en ce que** la paroi de séparation (2c) de l'adaptateur (2) est pourvue d'au moins un évidement (5) dans le sens radial pour la fixation du bouton (3).

10. Unité de fixation selon l'une quelconque des revendications 1 à 9, **caractérisée en ce que** la pièce de fixation (1) ainsi que l'adaptateur (2) sont réalisés comme des pièces moulées par injection en matière plastique.

11. Unité de fixation selon la revendication 10, **caractérisée en ce que** la matière plastique des pièces moulées par injection est une matière thermoplastique.

12. Unité de fixation selon l'une quelconque des revendications 1 à 11, **caractérisée en ce que** le bouton (3) est placé sur l'unité de fixation (B) et est fixé sur l'unité de fixation (B).

13. Unité de fixation selon la revendication 12, **caractérisée en ce que** le bouton (3) est fixé de manière à s'encliqueter sur l'unité de fixation (B).

14. Unité de fixation selon la revendication 12 ou 13, **caractérisée en ce que** le bouton (3) est réalisé en une seule partie et essentiellement à symétrie de révolution.

15. Unité de fixation selon l'une quelconque des revendications 12 à 14, **caractérisée en ce que** le bouton (3) présente côté adaptateur une surface d'appui (3a) plane avec des moyens de fixation sur l'unité de fixation (B).

16. Unité de fixation selon la revendication 15, **caractérisée en ce que** les moyens de fixation du bouton (3) sur l'unité de fixation (B) présentent au moins un bec d'encliquetage (7).

17. Unité de fixation selon la revendication 16, **caractérisée en ce que** le bouton (3) est réalisé comme un corps creux avec un évidement (A3) pour le placement sur le tenon (2a) de l'adaptateur (2).

18. Unité de fixation selon la revendication 17, **caractérisée en ce que** l'évidement (A3) est essentiellement cylindrique.

19. Unité de fixation selon la revendication 18, **caractérisée en ce que** l'évidement (A3) présente au moins un ressort (6) dans le sens axial pour l'introduction dans l'au moins une rainure (4).

20. Unité de fixation selon l'une quelconque des revendications 12 à 19, **caractérisée en ce que** le bouton (3) est réalisé comme une pièce moulée par injection en matière plastique.

21. Unité de fixation selon la revendication 20, **caractérisée en ce que** la matière plastique du bouton (3) est une matière thermoplastique.
